# EUROPÄISCHE PATENTSCHRIFT

(11) **EP 2 132 758 B1**
(45) Veröffentlichungstag und Bekanntmachung des Hinweises auf die Patenterteilung: **06.11.2019**
(21) Anmeldenummer: 08708591.6
(22) Anmeldetag: 01.02.2008
(51) Int. Cl.: F02N 11/08, F16K 7/02, H01H 50/44, H01H 51/06, H01F 7/16, H01H 47/06, H01H 47/08, F02N 15/06

(54) **STARTERMECHANISMUS MIT MEHRSTUFIGEM HUBRELAIS**
STARTER MECHANISM HAVING A MULTILEVEL LIFTING RELAY
MÉCANISME DE DÉMARRAGE À RELAIS DE MONTÉE À PLUSIEURS NIVEAUX

(30) Priorität: 30.03.2007 DE 102007015396
(43) Veröffentlichungstag der Anmeldung: 16.12.2009
(73) Patentinhaber: SEG Automotive Germany GmbH, 70499 Stuttgart (DE)
(72) Erfinder: HEUSEL, Jochen, 72768 Reutlingen (DE); NEUBURGER, Martin, 73312 Geislingen (DE); KNORR, Torsten, 71665 Vaihingen/enz (DE)
(74) Vertreter: Steinbauer, Florian
(86) Internationale Anmeldenummer: PCT/EP2008/051285
(87) Internationale Veröffentlichungsnummer: WO 2008/119577

(56) Entgegenhaltungen:
- DE-A1- 10 034 779
- DE-A1- 10 160 300
- DE-A1- 10 320 729
- DE-A1-102004 032 373
- US-A- 4 873 607

## Beschreibung

### Stand der Technik

Die Erfindung geht aus von einem Startermechanismus für Verbrennungsmotoren mit einem Einspurrelais zur gesteuerten Koppelung des Elektrostarters mit dem Verbrennungsmotor.

Es sind Ritzelstarter bekannt, bei denen beim Startvorgang ein Starterritzel mit Hilfe eines Hubmagneten in den Zahnkranz des Verbrennungsmotors eingespurt wird. Das Ritzel schließt beim Erreichen einer eingespurten Endposition, d. h. bei vollem Eingreifen in den Zahnkranz des Verbrennungsmotors, eine Kontaktbrücke im Hubmagneten. Durch das Schließen der Kontaktbrücke wird der elektrische Startermotor mit Strom versorgt. Nachdem der Verbrennungsmotor gestartet wurde, wird der Hubmagnet abgeschaltet, wodurch sich das Ritzel vom Zahnkranz des Verbrennungsmotors löst und somit der elektrische Startermotor nicht mehr mit dem Verbrennungsmotor gekoppelt ist.

Bei üblichen Startern wird der Hubmagnet beim Starten mit dem Nennstrom bestromt, so dass das Ritzel eine konstante Beschleunigung erfährt und folglich beim Erreichen des Zahnkranzes des Verbrennungsmotors schlagartig abgebremst wird. Insbesondere bei Hybridmotoren, bei denen auch während des Betriebs der Verbrennungsmotor regelmäßig an- und abgeschaltet wird, ergibt sich daher eine hohe Geräuschbelastung.

Zur Verminderung der Geräuschbelastung schlägt die Anmeldung DE 197 02 321 A1 eine Bestromung eines Einrückrelais' vor, bei dem mittels Pulsweitenmodulation die auf das Ritzel wirkende Beschleunigungskraft gezielt gesteuert werden kann. Die dort beschriebene Ansteuerung sieht vor, die Bewegung durch Änderung des Tastverhältnisses des zugeführten Stromes gezielt zu steuern, um so eine gewünschte Einrückbewegung zu erreichen. Auf Grund der hohen erforderlichen Magnetstärke muss die der Pulsweitenmodulation zu Grunde liegende Frequenz höher als 20 kHz sein, da sich andernfalls eine Geräuschbelastung durch die Ansteuerung des Hubmagneten im hörbaren Bereich ergibt. Somit sind Frequenzen von größer als 20 kHz erforderlich, die wiederum dazu führen, dass die Induktivität des Hubrelais' sehr gering sein muss, um eine gezielte Ansteuerung zu erlauben. Ein derart pulsweitenangesteuertes Hubrelais umfasst daher eine geringe Anzahl an Windungen und einen hohen Drahtquerschnitt, um die erforderliche Kraft trotz geringer Windungszahl erzeugen zu können. Gleichzeitig sind hohe Versorgungsströme notwendig.

### Offenbarung der Erfindung

Aus DE 10 2004 032 373 A1 ist in Verbindung mit einer Starteranordnung mit einer Haltewicklung und einer Einzugswicklung ein Hubrelais bekannt mit einem beweglichen Betätigungselement, auf das ein erster Hubmagnet kraftübertragend wirkt und mindestens einem zweiten Hubmagneten, der auf dasselbe bewegliche Betätigungselement kraftübertragend wirkt.

Aus DE 103 20 729 A1 ist eine Hubmagnetanordnung bekannt, die in Verbindung mit einem sehr aufwendigen Servo- oder Regelventil eingesetzt wird. Die Hubmagnetanordnung umfasst ein bewegliches Betätigungselement, auf das zwei Hubmagnete kraftübertragend einwirken können, dabei kann die Magnetkraft der beiden Hubmagnete unabhängig voneinander eingestellt werden. Dies ist möglich, da die zugehörige Spulenanordnung zwei Spulen aufweist, die mittels zweier getrennter Steuerkreis unabhängig voneinander angesteuert werden können.

US 4,873,607 offenbart ein Verfahren zum Betrieb elektromagnetischer Schalter, wobei die Erregerspule des elektromagnetischen Schalters mit einem graduell ansteigenden Strom beaufschlagt wird. Nach einem Schließen der Kontakte wird der Erregerstrom auf ein Minimum reduziert, der gerade noch so groß ist, um die Kontakte in einem Schließzustand zu halten.

Der erfindungsgemäße Startermechanismus erlaubt eine geräuscharme Ankoppelung des Starterritzels an den Zahnkranz des Verbrennungsmotors, ohne dass besonders hohe Ströme notwendig sind und somit ohne aufwendige Leistungselektronik. Ferner ist mit dem erfindungsgemäßen Startermechanismus keine Pulsweitensteuerung erforderlich, so dass die Steuerung deutlich vereinfacht ist. Die gemäß der Erfindung eingesetzten Hubrelais sind nicht auf Elektromagneten mit geringer Induktivität beschränkt, vielmehr können Wicklungen mit hoher Windungszahl verwendet werden, welche bereits bei geringen Strömen eine hohe Magnetkraft erzeugen.

Das der Erfindung zu Grunde liegende Konzept liegt darin, die Leistung eines Elektromagneten und somit dessen erzeugte Magnetkraft über die Auswahl von einem oder von mehreren Wicklungsabschnitten eines Elektromagneten zu steuern.

Ist so bei einer ersten Startphase eine geringe Magnetkraft erforderlich, wird ein Teil aller Wicklungsabschnitten bestromt, wobei die Anzahl erhöht wird, wenn höhere Magnetkräfte erforderlich sind.

Grundsätzlich wird die Summe der erzeugten Gesamtmagnetkraft durch vollständiges An- oder Abschalten einzelner Wicklungsabschnitte erreicht, wobei die einzelnen erzeugten Magnetkraftkomponenten null (ausgeschaltet), 100 % (Bestromung des Wicklungsabschnitts mit Nennstrom) oder -100 % (Bestromung des Wicklungsabschnitts in umgekehrter Richtung) sind. Der Anteil des einzelnen Wicklungsabschnitts an der Gesamtmagnetkraft ergibt sich durch die Windungszahl, die magnetische Koppelung, die Geometrie und die Anordnung relativ zu dem magnetischen Abschnitt, der mit dem Betätigungselement in kraftschlüssiger Verbindung steht. Ferner ist noch die Wicklungsrichtung zu berücksichtigen. Prinzipiell können die einzelnen Wicklungskomponenten der Wicklungsabschnitte sich zueinander summieren, wenn die erzeugten Magnetfelder die gleiche Richtung aufweisen, oder können sich zum Teil kompensieren, wenn zumindest ein Wicklungsabschnitt ein Magnetfeld erzeugt, das den Magnetfeldern der anderen Wicklungsabschnitte entgegengesetzt ist, beispielsweise durch entgegengesetzt gepolte Bestromung oder durch entgegengesetzten Wicklungssinn.

Erfindungsgemäß wirken die von den einzelnen Magneten, d. h. von den einzelnen Wicklungsabschnitten erzeugten Magnetkräfte zusammen, beispielsweise indem die Magnetkräfte direkt auf das selbe Magnetelement wirken. Alternativ können die einzelnen Elemente, auf die die jeweiligen Hubmagnete wirken, miteinander kraftschlüssig in direkter oder indirekter Weise verbunden werden, d. h. beispielsweise über Hebelmechanismen, Getriebe oder Ähnliches. Bevorzugt wirken alle Hubmagnete auf das gleiche Betätigungselement, beispielsweise auf verschiedene Stellen des Betätigungselements oder vorzugsweise auf dieselbe Stelle des Betätigungselements.

Prinzipiell wirkt das von den Hubmagneten erzeugte Magnetfeld vorzugsweise auf einen magnetischen Abschnitt, der Kraft übertragend mit dem Betätigungselement verbunden ist, beispielsweise durch einteilige Ausführung mit dem Betätigungselement. Der magnetische Abschnitt kann magnetische Materialien mit einer hohen relativen magnetischen Permeabilität und/oder einer hohen Vormagnetisierung, beispielsweise durch permanent magnetische Materialien, umfassen. Vorzugsweise ist der magnetische Abschnitt eingerichtet, auch bei voller Bestromung der meisten oder aller Wicklungsabschnitte nur in geringem Maße magnetisch gesättigt zu sein.

Das erfindungsgemäße Hubrelais umfasst mehrere Hubmagneten, d. h. einen ersten und mindestens einen zweiten Hubmagneten. Die Unterteilung in mehrere Hubmagneten bedeutet eine elektrische Unterteilung, so dass ein und dieselbe Wicklung in mehrere Hubmagnete aufgeteilt sein kann, wenn, beispielsweise durch Anzapfung, die Wicklung in verschiedene Wicklungsabschnitte eingeteilt werden kann, die jeweiligen Hubmagneten entsprechen und verschieden angesteuert werden können. Die Unterteilung in mehrere, voneinander getrennt steuerbare Hubmagnete führt nicht notwendigerweise zu bestimmten körperlichen Anordnungen. Es werden zwei Hubmagnete durch direkt aneinander grenzende Wicklungen eines durchgehenden Drahts realisiert, wobei die Unterteilung der Magnete durch das Einführen einer Anzapfung ausgeführt wird. Die Unterteilung der Hubmagnete kann in einer nicht erfindungsgemäßen Ausführung auch eine körperliche Unterteilung sein, so dass zwei körperlich voneinander getrennte Wicklungen vorgesehen werden, die jeweils zwei Enden aufweisen, welche durch weitere Schaltungen angesteuert werden. Die Trennung zweier Hubmagnete kann auch vorsehen, den ersten Hubmagneten auf ein erstes magnetisches Element wirken zu lassen, und den zweiten Hubmagneten auf ein zweites magnetisches Hubelement wirken zu lassen, wobei die magnetischen Elemente über Hebelmechanismen und/oder Getriebemechanismen Kraft übertragend miteinander verbunden sind, um so eine Zusammenführung der erzeugten Kräfte zu erreichen, wobei die zusammengeführten Kräfte auf ein Betätigungselement übertragen werden. Werden mehrere Hubmagnete körperlich voneinander getrennt realisiert, so können diese beispielsweise auf ein durchgängiges Betätigungselement wirken, welches gleichzeitig magnetische Eigenschaften hat, um so eine Zusammenwirkung der einzelnen erzeugten Magnetkräfte zu erreichen. Insbesondere kann ein erster Hubmagnet direkt neben einem zweiten Hubmagneten vorgesehen werden, oder beide Hubmagneten können als konzentrisch zueinander angeordnete Wicklungen vorgesehen werden, wobei ein gemeinsamer magnetischer Abschnitt durch die Längsachsen beider Hubmagnete verläuft, in dem die erzeugten Magnetfelder kombiniert werden, um diese einem Pol zuzuführen, an dem wiederum ein bewegliches Betätigungselement angeordnet ist.

Grundsätzlich können die von den einzelnen Hubmagneten erzeugten Magnetfelder mittels eines Jochs kombiniert werden, oder können in einzelne Kräfte umgesetzt werden, welche durch Kraft übertragende Verbindungen zu einer gemeinsamen magnetisch erzeugten Kraft zusammengeführt werden.

In einer bevorzugten Ausführungsform umfasst das Hubrelais ein bewegliches Betätigungselement, welches einen magnetischen Abschnitt umfasst, wobei die Magnetkräfte des ersten und zweiten Hubmagneten auf diesen magnetischen Abschnitt wirken. Hierzu kann beispielsweise die Magnetkraft des ersten Magneten mit der Magnetkraft des zweiten Hubmagneten zusammengeführt werden, indem diese auf einem gemeinsamen Joch angeordnet sind. Ein Ende oder beide Enden des Jochs können dann in der Nähe oder an einem magnetischen Abschnitt des Betätigungselements vorgesehen sein, wobei die Magnetkraft dazu führt, dass ein zwischen dem Betätigungselement und dem Pol des Jochs vorgesehener Luftspalt verringert wird. Das Betätigungselement kann diese Kraft an das Ritzel übertragen, beispielsweise über einen Hebel, um dieses zu bewegen.

In einer anderen Ausführung sind der erste und der zweite Hubmagnet als zumindest teilweise konzentrische Wicklungen ausgebildet, die ein Joch umgreifen. Alternativ können die konzentrischen Wicklungen das bewegliche Betätigungselement umgreifen.

In einer weiteren alternativen Ausführungsform ist der erste Hubmagnet neben einem zweiten Hubmagneten und/oder einem weiteren Hubmagneten angeordnet, wobei die Hubmagnete jeweils durch Wicklungen realisiert werden, die um das Joch gewickelt sind. Statt des Jochs können die nebeneinander angeordneten Hubmagnete auch das Betätigungselement umgreifen.

Zur Unterteilung der Hubmagnete in elektrischer Hinsicht können diese als durchgehende Wicklung ausgebildet sein, die eine oder mehrere Anzapfungen aufweist. Die Anzapfungen dienen als elektrische Unterteilungen der gesamten Wicklung in einzelne Wicklungsabschnitte, die die jeweiligen ersten, zweiten und weiteren Hubmagnete realisieren. Alternativ kann die elektrische Unterteilung der Hubmagnete auch durch einzelne, voneinander getrennte Wicklungen vorgesehen sein, deren Enden jeweils an eine schaltbare Stromversorgung angeschlossen werden können. Im Falle einer durchgehenden Wicklung mit Anzapfung kann die schaltbare Stromquelle an ein Wicklungsende und eine Anzapfung, eine Anzapfung und eine weitere Anzapfung und/oder an beide Enden der durchgehenden Wicklung angeschlossen werden. Zur Einstellung der zu erzeugenden Magnetkraft kann so die gesamte Wicklung bestromt werden, wenn die Stromquelle an die beiden Enden der Wicklung angeschlossen wird, um eine hohe Hubkraft zu erzeugen, wohingegen die erzeugte Hubkraft verringert ist, wenn die Stromquelle an ein Wicklungsende und an eine Anzapfung bzw. an zwei Anzapfungen angeschlossen wird, da somit nur ein Teil der gesamten Wicklung mit Strom beaufschlagt wird.

In einer weiteren Ausführung umfasst das Hubrelais ferner mindestens ein NTC-Element, dessen Widerstand mit steigender Temperatur fällt. Das NTC-Element ist vorzugsweise in Serie zwischen einer Stromquelle und der Wicklung angeschlossen, d. h. zwischen Stromquelle und einem der Wicklungsenden oder zwischen Stromquelle und einer Anzapfung.

Prinzipiell kann statt einer Stromquelle auch eine Spannungsquelle verwendet werden. Ferner kann ein Wicklungselement mit einer Anzapfung und/oder zwei Anzapfungen miteinander kurzgeschlossen werden, so dass der jeweilige dazwischen liegende Wicklungsabschnitt nicht mehr zur Krafterzeugung vorgesehen wird. Im Falle einer Spannungsquelle wird dann der durchfließende Strom erhöht, wodurch die gesamte erzeugte Magnetkraft verändert wird. Im Falle einer Stromquelle, die einen konstanten Strom liefert, wird durch das Kurzschließen nur ein Teil der Wicklung bestromt, wobei der kurzgeschlossene Wicklungsabschnitt keine Magnetkraft erzeugt, wodurch die Magnetkraft geeignet verringert werden kann. In gleicher Weise kann durch Auflösen eines solchen Kurzschlusses die Magnetkraft erhöht werden, indem mehr Wicklungsabschnitte als im Kurzschlussfall mit Strom versorgt werden. Zur Änderung der Gesamt-Hubkraft kann die Verschaltung der Hubmagnete geändert werden, d. h. von seriell in parallel und umgekehrt.

Das NTC-Element kann auch in anderer Weise mit der Stromversorgung bzw. Spannungsversorgung und den Hubmagneten verbunden werden, wobei das NTC-Element vorzugsweise die Temperatur des Wicklungsabschnitts umfasst, in dessen Stromzuführung es zugeschaltet ist. Alternativ kann das NTC-Element nicht in die direkte Stromzuführung der Hubmagnete eingeschaltet sein, sondern an eine Steuerung angeschlossen sein, welche die Stromversorgung und/oder die Spannungsversorgung der jeweiligen Hubmagnete vorsieht.

Das erfindungsgemäße Konzept wird ferner von einem Verfahren zum Betätigen einer Kupplung umgesetzt, bei dem die Hubmagnetenvorrichtung mit mindestens zwei Wicklungsabschnitten vorgesehen wird, die getrennt voneinander bestromt werden können, um so durch getrenntes Bestromen der jeweiligen Wicklungsabschnitte in oben beschriebener Weise die erzeugte gesamte Magnetkraft einzustellen.

In einer bevorzugten Ausführungsform des Verfahrens umfasst das Betätigen der Kupplung das Zuführen von Strom und/oder von Spannung an eine Anzahl von Wicklungsabschnitten, wobei die Anzahl der Wicklungsabschnitte während der Startphase zunimmt. Daher kann somit in einem ersten Abschnitt der Startphase nur einer der beiden Wicklungsabschnitte mit Strom versorgt werden, wohingegen in einer zweiten Phase des Startvorgangs beide Wicklungsabschnitte, d. h. die gesamte Wicklung, bestromt werden bzw. wird. Dadurch erzeugt die Hubmagnetenvorrichtung in der zweiten Phase eine höhere Magnetkraft als in der ersten Phase, wodurch ein Schlagen verhindert wird und somit entstehende Geräusche zu vermindert werden. Alternativ kann entsprechend der Bestromung zunächst eine höhere Hubkraft erzeugt werden, auf die eine Phase mit einer geringeren Hubkraft folgt, wobei die Anzahl der bestromten Hubmagnete entsprechend geändert wird.

Das zu Grunde liegende erfinderische Konzept wird ferner durch einen Starter für einen Verbrennungsmotor eines Kraftfahrzeugs realisiert, der ein Hubrelais, einen elektrischen Startermotor und eine Kupplung umfasst, die den elektrischen Startermotor mit dem Verbrennungsmotor verbindet, und das Hubrelais die Kupplung betätigt, wobei das Hubrelais mindestens zwei voneinander getrennt bestrombare Wicklungsabschnitte bzw. Hubmagneten umfasst, die, wie oben beschrieben, mit elektrischer Leistung versorgt werden können.

Das Verfahren wird vorzugsweise von einer Steuereinrichtung umgesetzt, die zwei verschiedene Ausgangssignale mit entsprechendem Timing ausgeben kann, um die gewünschte Erhöhung oder Reduktion der Hubkraft für eine Endphase des Startvorgangs, d. h. in einer zweiten Phase, zu verringern. Die Steuereinrichtung bildet so die Komplementärkomponente zu dem oben beschriebenen Hubrelais, dessen Funktion zusammen mit der Ansteuerung das zu Grunde liegende erfinderische Konzept umsetzt. Die Ausgangssignale der Steuerungseinrichtung können serielle digitale oder analoge Steuersignale für eine Leistungsendstufe sein, die die mehreren Wicklungsabschnitte des Hubmagneten entsprechend ansteuert. Alternativ kann die Steuereinrichtung auch Ausgangssignale abgeben, die eine ausreichende elektrische Leistung besitzen, um die Hubmagnete direkt mit Strom zu versorgen. Alternativ kann die Steuereinrichtung auch in der zweiten Startphase (oder in der ersten Startphase) einen Wicklungsabschnitt hinzuschalten, dessen Wirkung entgegengesetzt der Wirkung weiterer Hubmagnete ist, und der so die Gesamthubkraft durch Teilkompensation verringert.

Vorzugsweise umfasst die Steuerungseinrichtung mindestens zwei Ausgänge, die die zwei Hubmagnete getrennt voneinander mit Strom versorgen, oder, alternativ, getrennte Leistungsendstufen der Hubmagnete gemäß dem gewünschten Verfahren ansteuern.

Die Steuereinrichtung kann in einer einfachen Ausführung durch monostabile Flip-Flops realisiert werden, deren Zeitkonstanten die Bestromungsphasen der einzelnen Hubmagnete definieren. Alternativ kann die Steuerungseinrichtung auch Signale von Sensoren empfangen, die die Stellung eines Betätigungselements einer Kupplung ermitteln, und so, beispielsweise bei Erreichen einer bestimmten Stellung, die Gesamtmagnetkraft in der oben beschriebenen Weise verringern. Ferner kann die Steuereinrichtung als Recheneinheit mit Programmspeicher vorgesehen werden, beispielsweise als Microcontroller mit einem elektrischen Speicher. Die Steuereinrichtung kann ferner von einem Teil einer Gesamt-Kfz-Steuerung realisiert werden, beispielsweise als Routine, Programm oder Programmabschnitt der Software, die im Zusammenwirkung mit der Hardware der Gesamt-Kfz-Steuerung den Betrieb des Kraftfahrzeugs steuert.

Die Steuereinrichtung steuert vorzugsweise auch die Bestromung eines Elektromotors, dessen Rotationsleistung zum Anlassen eines Verbrennungsmotors, über die Kupplung gesteuert, an diesen übertragen wird.

Gemäß einer weiteren Ausführung wird das Hubrelais mit einer elektrischen Leistungsquelle verbunden, wobei Sensoren vorgesehen werden, die den Strom und/oder die Spannung erfassen, der in einen oder mehrere Hubmagnete bzw. einen oder mehrere Wicklungsabschnitte fließt bzw. die an diesen anliegt. Da die Bewegung des Betätigungselements in induktiver Rückkopplung eine Spannung in den Hubmagneten und/oder den Wicklungsabschnitten erzeugt, können die erfassten Strom- bzw. Spannungswerte zur Steuerung verwendet werden, indem diese zur Ermittlung des oder der Zeitpunkts/e herangezogen werden, in denen die Gesamtmagnetkraft gemäß einem gewünschten Sollwert geändert oder eingestellt werden soll. In einer Ausführung wird eine Sensorwicklung verwendet, die an den Hubmagneten, an den Wicklungsabschnitten und/oder an dem beweglichen Betätigungselement angeordnet ist, um über die in der Sensorwicklung induzierte Spannung die Bewegung des Betätigungselements und/oder die magnetische Koppelung zwischen Hubmagnet und Betätigungselement zu ermitteln.

Bei der Ansteuerung der Hubmagnete, beispielsweise durch die Steuereinrichtung, kann ferner die Temperatur berücksichtigt werden, die über ein NTC-Element erfasst wird, um das temperaturabhängige Verhalten der Hubmagnete zu kompensieren, vorzugsweise durch Ändern der Länge bzw. der Start- und Zeitpunkte der ersten und zweiten Phase des Startvorgangs. Da sich der Innenwiderstand und somit die erzeugte Hubkraft mit der Temperatur ändert, kann dadurch die Gesamt-Hubkrafttemperatur unabhängig vorgesehen werden.

In einer weiteren Ausführungsform umfasst das Hubrelais einen Hubmagneten bzw. einen Wicklungsabschnitt, der bei Bestromung eine Hubkraft erzeugt, die zur vollständigen Koppelung eines Startermotors an einen Verbrennungsmotor ausreicht. Um anfangs eine höhere Hubkraft zu erreichen, kann ein weiterer Hubmagnet hinzugeschaltet werden, wobei bei dessen Ausfall die Magnetkraft des ersten Hubmagneten zur vollständigen Kupplung ausreicht. Vorzugsweise ist auch der weitere Hubmagnet derart eingerichtet, dass er eine Magnetkraft erzeugt, die zur vollständigen Kupplung ausreicht. Auf diese Weise wird eine Redundanz erzeugt, die das Anlassen des Verbrennungsmotors auch bei Ausfall eines Hubmagneten bzw. eines Wicklungsabschnitts erlaubt.

Als weitere Sicherheitsmaßnahme kann jeder Hubmagnet bzw. jeder Wicklungsabschnitt eine getrennte Zuleitung aufweisen, so dass beim Betrieb im Motorraum, in dem auch die Zuleitung ausfallen kann, auch bei Ausfall einer Zuleitung eine Mindesthubkraft gewährleistet ist. In einer weiteren Ausführung steuert die Motorelektronik des Kraftfahrzeugs die Auslösung des Startvorgangs, wobei ein weiteres, davon getrenntes Start-Stopp-Steuergerät die einzelne Ansteuerung der Hubmagneten durchführt. Vorzugsweise kann das Start-Stopp-Steuergerät durch einen zusätzlichen Auslösemechanismus angesteuert werden, so dass bei Ausfall der Motorelektronik noch die Funktion des Anlassens gewährleistet ist. In gleicher Weise kann das Start-Stopp-Steuergerät mittels externer Steuerung überbrückt werden, so dass die Motorelektronik die Hubmagnete direkt ansteuert. Auf diese Weise ist gewährleistet, dass der Verbrennungsmotor gestartet werden kann, wenn auch ohne die oben beschriebene zwei- oder mehrstufige Ansteuerung der Hubmagnete.

In einer Ausführungsform wird in einer ersten Startphase, in der zum Einspuren eine geringere Hubkraft erzeugt wird, beispielsweise durch Bestromung nur eines Teils der zur Verfügung stehenden Hubmagnete, eine geringere Hubkraft erzeugt, als in einer zweiten darauf folgenden Phase, in der eine hohe Hubkraft durch Bestromen aller vorhandenen Hubmagnete erzeugt wird, um das Ritzel sicher zu positionieren.

Ferner sind mehrere aufeinander folgende Phasen möglich, in denen die Anzahl der bestromten Hubmagnete gemäß einer Soll-Kraft vorgesehen wird.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: ein Prinzipschaltbild des erfindungsgemäßen Hubrelais' in einer ersten Ausführung,
- Figur 2: das Prinzipschaltbild eines Hubrelais' in einer anderen Ausführung,
- Figur 3: ein Prinzipschaltbild einer Anordnung von Hubmagneten an einem Betätigungselement einer Kupplung,
- Figuren 4a-4c: zeitliche Darstellungen der Aktivierung von Hubmagneten, wobei die Figur 4a den Stand der Technik und Figuren 4b und 4c die erfindungsgemäße Vorgehensweise darstellen,
- Figur 5: eine erste erfindungsgemäße Beschaltungsvariante und
- Figur 6: eine zweite erfindungsgemäße Beschaltungsvariante.

### Ausführungsformen:

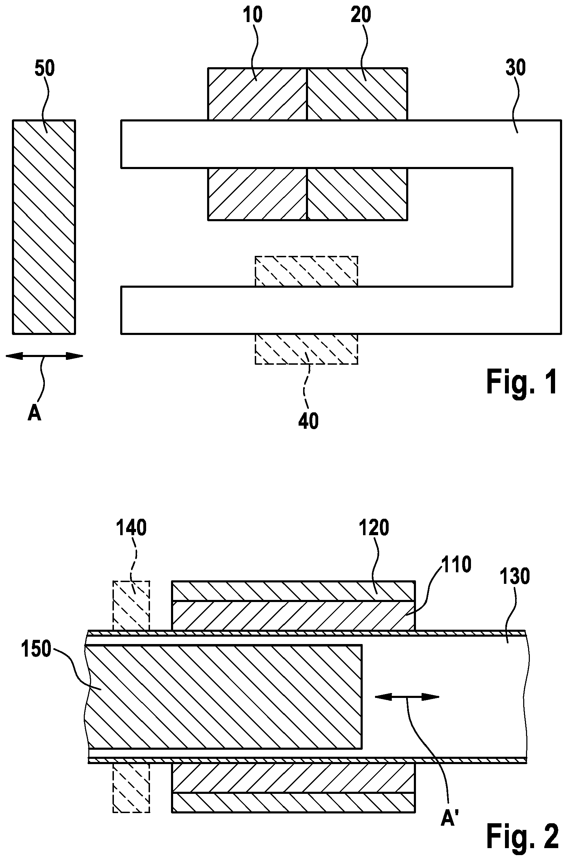

Die Figur 1 zeigt ein erfindungsgemäßes Hubrelais in Prinzipdarstellung. Das Hubrelais umfasst einen ersten Hubmagneten 10 und einen zweiten Hubmagneten 20, die nebeneinander um ein Joch 30 gewickelt sind. Das Joch 30 umfasst einen Schenkel, der die gleiche Längsachse wie die beiden zylindrisch ausgeformten Hubmagneten 10 und 20 aufweist. Der erste Hubmagnet 10 stößt direkt an den zweiten Hubmagneten 20 an, wobei jedoch auch zwischen diesen eine Lücke vorgesehen sein kann. Das Joch 30 ist in einem Material ausgebildet, das eine hohe relative magnetische Permeabilität aufweist, und das somit die von dem ersten Hubmagneten 10 und dem zweiten Hubmagneten 20 erzeugte Magnetfeld sammelt. Das Joch umfasst einen zweiten Schenkel, der über einen Steg zusammen mit dem ersten Schenkel eine U-Form bildet. Der zweite Schenkel wird von einem zusätzlichen dritten Magneten 40 umgriffen, dessen magnetisches Feld ebenfalls auf das Joch 30 wirkt. Am offenen Ende des U-förmigen Jochs ist ein bewegliches Betätigungselement 50 dargestellt, das ebenfalls magnetische Eigenschaften aufweist und somit bei Aktivierung einer oder aller Hubmagneten zu den offenen Enden des Jochs, die in diesem Falle Magnetpole bilden, bewegt wird.

Das in Figur 1 dargestellte Hubrelais weist somit einen ersten Magneten 10 und mindestens einen zweiten Magneten 20 bzw. 40 auf, deren magnetisches Feld von einem Joch gesammelt wird. Das gesammelte magnetische Feld wird dann an den offenen Enden des Jochs in der Nähe des Betätigungselements 50 in eine gemeinsame Hubkraft umgesetzt. In der Figur 1 umgreifen die Hubmagnete nicht das bewegliche Betätigungselement selbst, sondern ein Joch, das als Sammelschiene für die erzeugten Magnetfelder wirkt. Durch die gemeinsame Hubkraft wird das bewegliche Betätigungselement 50 in einer Richtung A relativ zum Joch 30 bewegt.

Der erste Hubmagnet 10 und der zweite Hubmagnet 20 sind aus einer Wicklung vorgesehen, wobei der erste Hubmagnet von dem zweiten durch eine Anzapfung getrennt ist. In einer nicht erfindungsgemäßen Ausführung kann der erste Hubmagnet 10 getrennt von dem zweiten Hubmagneten 20 gewickelt sein, so dass beide Hubmagnete jeweils zwei Wicklungsenden aufweisen, die nach außen geführt sind und getrennt voneinander an eine Stromansteuerung angeschlossen werden können.

Die Figur 2 zeigt eine Ausführungsform eines Hubrelais' in einer Prinzipdarstellung. Das Hubrelais umfasst einen ersten Hubmagneten 110 und einen zweiten Hubmagneten 120, die als konzentrische Wicklungen oder Wicklungsabschnitte um einen gemeinsamen zylindrischen Raum 130 angeordnet sind. In dem Raum 130 ist ein Betätigungselement 150 vorgesehen, auf das auf Grund ihrer Anordnung beide Hubmagnete 120, 110 wirken. Die Konstruktion der in Figur 2 dargestellten Ausführung sieht somit eine Zusammenführung der Magnetkräfte vor, die von den beiden Hubmagneten erzeugt werden. Dieses Prinzip steht im Gegensatz zu dem Hubrelais von Figur 1, bei dem lediglich die Magnetfelder addiert wurden, welche dann gemeinschaftlich in eine gemeinsame Hubkraft gegenüber dem Betätigungselement umgesetzt wurden. In der in Figur 2 dargestellten Ausführung umfasst das Hubrelais ferner einen weiteren Hubmagneten 140, der als zusätzlicher Hubmagnet vorgesehen ist. Grundsätzlich ist zu bemerken, dass die Erfindung auch ohne die zusätzlichen Hubmagnete 140, 40 realisiert werden kann.

Die einzelnen von den Hubmagneten 110, 120 und 140 erzeugten Magnetkräfte führen zu einer Bewegung des beweglichen Betätigungselements 150 in eine Richtung A'.

Die Hubmagnete 110, 120 und 140 sind als konzentrisch um einen zylindrischen Raum herum gewickelte Wicklungen vorgesehen, wobei der erste Hubmagnet 110 und der zweite Hubmagnet 120 als zwei getrennte Wicklungen vorgesehen werden können, die übereinander gewickelt werden, oder als eine durchgängige Wicklung, die über eine Anzapfung in zwei elektrisch getrennte Wicklungsabschnitte unterteilt wird, wodurch der erste und der zweite Hubmagnet vorgesehen werden. Der zusätzliche Hubmagnet 140 ist axial versetzt zu dem ersten und dem zweiten Hubmagneten vorgesehen, kann jedoch auch in der gleichen Höhe wie die Hubmagnete 120 und 110 vorgesehen sein (nicht dargestellt).

Die beweglichen Betätigungselemente 50, 150 werden zur Betätigung einer Kupplung vorgesehen, so dass durch die Bewegung in der Richtung A bzw. A' ein Starter-Elektromotor gezielt mit einem Ritzel eines Verbrennungsmotors gekoppelt wird, oder nicht.

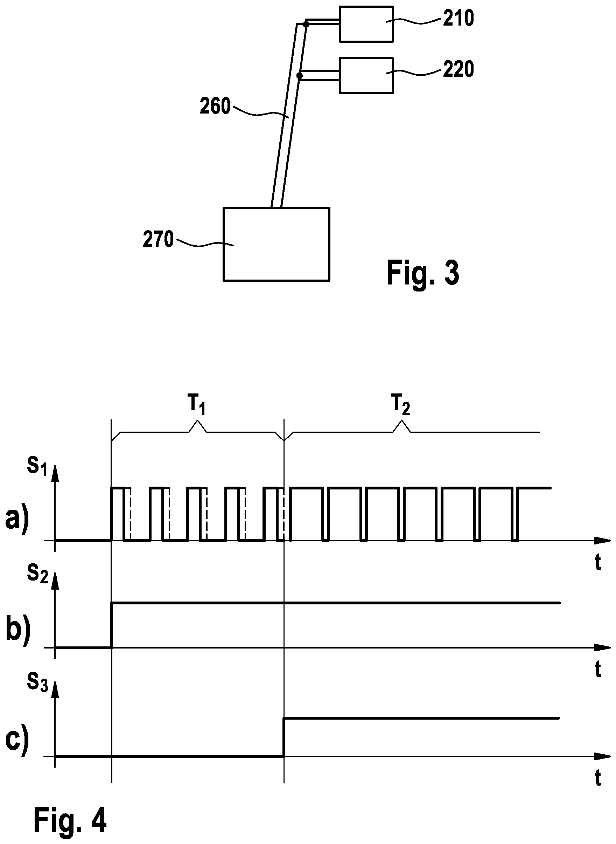

In der Figur 3 ist eine Hubmagnetvorrichtung in Prinzipdarstellung dargestellt, die zwei körperlich getrennte Hubmagnete aufweist. Ein erster Hubmagnet 210 und ein zweiter Hubmagnet 220 weisen jeweils bewegliche Betätigungselemente auf, die Kraft übertragend mittels eines Scharniers an ein Betätigungselement 260 einer Kupplung 270 verbunden sind. Die Gesamt-Hubkraft der beiden Hubmagnete 210 und 220 addiert sich erst in dem Betätigungselement 260 der Kupplung 270, so dass in der in Figur 3 dargestellten Ausführung die jeweiligen magnetischen Felder voneinander getrennt erzeugt werden und getrennt in eine mechanische Hubkraft umgewandelt werden, wobei die erzeugten Hubkräfte in dem Betätigungselement 260 der Kupplung 270 zusammengeführt werden.

Die Addition der Wirkungen der Hubmagnete wird somit auf mechanischer Ebene erreicht, d. h. es werden die Kräfte addiert, wie es beispielsweise auch die Vorrichtung von Figur 2 vorsieht. Die in Figur 1 dargestellte Ausführung sieht jedoch die Zusammenführung der magnetischen Felder vor, wobei die so zusammengeführten Gesamtfelder gemeinschaftlich in eine mechanische Kraft umgesetzt werden, die auf das bewegliche Betätigungselement 50 wirkt. Die Figur 2 sieht eine mechanische Wirkung auf ein Betätigungselement an der gleichen Stelle des Betätigungselements durch beide Hubmagnete 110 und 120 vor, wohingegen das Eingreifen der Hubkräfte der ersten und zweiten Hubmagnete 210 und 220 in der in Figur 3 dargestellten Ausführung an dem Betätigungselement 260 der Kupplung 270 zusammengeführt werden. Die in Figur 2 dargestellte Ausführung ähnelt in ihrer Wirkung der in Figur 1 dargestellten Ausführung dahingehend, dass nicht nur die Kräfte, sondern auf Grund der gemeinschaftlichen Anordnung auch die elektrischen Felder an den gleichen Abschnitt des Betätigungselements 150 addiert werden.

Trotz verschiedener Wirkungsweisen der in den Figuren 1-3 dargestellten Ausführungen setzen diese das zu Grunde liegende erfinderische Konzept um, demgemäß die getrennte selektive Bestromung von mindestens zwei Hubmagneten zu verschiedenen, wählbaren Kraftniveaus führt, mit der ein bewegliches Betätigungselement, entweder des Hubrelais', oder der Kupplung, bewegt wird. Somit werden verschiedene Kraftkomponenten von verschiedenen Wicklungen bzw. Hubmagneten bzw. Wicklungsabschnitten erzeugt, die zu einer mehrstufigen Betätigung einer Kupplung führen. Mehrstufig bedeutet in diesem Zusammenhang, dass auf Grund der trennbaren Aktivierung bzw. Bestromung der verschiedenen Hubmagnete verschiedene Grade an Betätigungskraft erzeugt werden.

In den Figuren 4a-4c werden die Ansteuerungssignale der Erfindung (4b, 4c) den Ansteuersignalen gemäß dem Stand der Technik (Figur 4a) gegenüber gestellt.

In der Figur 4a wird die erzeugte Magnetkraft durch Pulsweitenmodulation verändert. Innerhalb einer Anfangsphase T₁ wird das Betätigungselement mit einer ersten Kraft betätigt, die kleiner als die Betätigungskraft während einer Endphase T₂ ist. Zur Steuerung der Leistung wird gemäß dem oben beschriebenen Stand der Technik, der durch die Figur 4a widergespiegelt wird, ein einzelner Hubmagnet mit einem geringen Tastverhältnis während des Zeitpunkts T₁ angesteuert, um so eine kleinere Kraft zu erzeugen. Zur Erzeugung einer größeren Kraft während der darauf folgenden Endphase T₂ wird das Tastverhältnis erhöht, um so eine höhere Kraft vorzusehen.

Im Gegensatz hierzu wird erfindungsgemäß während der ersten Phase T₁ nur ein erster Hubmagnet mit Strom, d. h. mit Gleichstrom oder einem Wechselstrom mit konstanter Wirkleistung beaufschlagt, d. h. S₂, während ein zweiter Hubmagnet stromlos bleibt (vgl. S₃, Figur 4c). Während der zweiten Phase T₂ werden beide Hubmagnete mit Strom versorgt, d. h. die Signale S₂ und S₃ haben einen Wert größer null. Dadurch, dass die Wirkung der beiden Hubmagnete addiert wird, ergibt sich somit eine höhere Gesamtwirkungskraft.

Alternativ kann während einer ersten Phase eine höhere Kraft erzeugt werden, indem sowohl S₂ als auch S₃ einen Wert größer null annehmen, wohingegen in der zweiten Phase eine geringere Kraft erzeugt werden soll, indem nur eines der Signale S₂ bzw. S₃ größer null ist.

Die Signale S₁, S₂ und S₃ stehen beispielsweise für eine angelegte Spannung, beispielsweise Gleichspannung oder Wechselspannung, mit konstanter Spitzenamplitude, die proportional zu der dargestellten Signalamplitude ist.

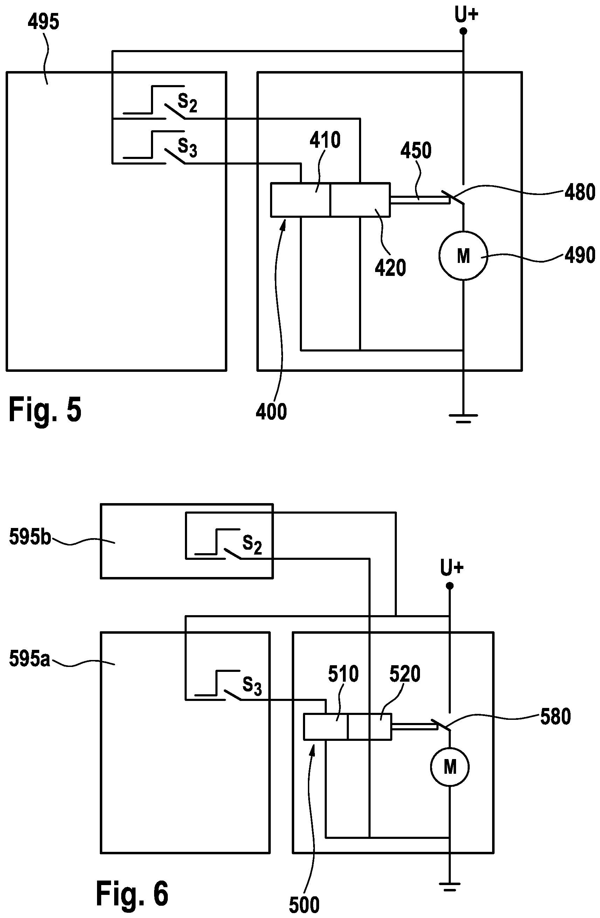

Die Figur 5 zeigt ein Schaltungsbeispiel der Hubmagnete in Kombination mit dem elektrischen Motor, der zur Erzeugung der Rotationsleistung verwendet wird, welche für den Startvorgang des Verbrennungsmotors erforderlich ist. Das Hubrelais 400 umfasst einen ersten Hubmagneten 410 und einen zweiten Hubmagneten 420. Beide Hubmagnete betätigen gemeinsam das bewegliche Betätigungselement 450, welches zur Betätigung einer Kupplung (nicht dargestellt) verwendet wird. Gleichzeitig schließt das bewegliche Betätigungselement 450 bei der Aktivierung einer oder beider Hubmagnete einen Schalter 480, was dazu führt, dass der elektrische Motor 490 an eine Spannungsquelle angelegt wird. Diese Spannungsquelle wird auch zur Versorgung des ersten Hubmagneten 410 und des zweiten Hubmagneten 420 verwendet, die einzeln über die Schalter S₂ und S₃ gesteuert werden. Die Steuerungsfolge der Schalter S₂ und S₃ ist in den Figuren 4b bzw. 4c dargestellt, wobei die in den Figuren 4b und 4c dargestellte Amplitude dem Strom entspricht, der durch den jeweiligen Schalter fließt.

In der Figur 6 ist eine alternative Beschaltung des erfindungsgemäßen Hubrelais' dargestellt. Die in Figur 6 dargestellte Schaltung umfasst ein Hubrelais 500, welches einen ersten Hubmagneten 510 und einen zweiten Hubmagneten 520 umfasst. Erfindungsgemäß sind die beiden Hubmagnete getrennt voneinander mit Strom versorgbar, wobei ein erster Schalter S₂ den zweiten Hubmagneten 520 gesteuert mit einer Versorgungsspannung versorgt, und ein zweiter Schalter S₃ den ersten Hubmagneten 510 mit einer Versorgungsspannung versorgt.

Im Vergleich der in Figur 5 dargestellten Ausführung mit der in Figur 6 dargestellten Ausführung sind in der in Figur 5 dargestellten Ausführung beide Schalter in einer gemeinsamen Steuereinrichtung untergebracht, die getrennt von einer Motorelektronik eines Kraftfahrzeugs vorgesehen sein kann, oder einen Teil dieser bilden kann. Im Gegensatz hierzu ist in der in Figur 6 dargestellten Darstellung der Schalter S₃ in einer Steuereinrichtung 595a, wohingegen der Schalter S₂ in einer Motorsteuerung 595b vorgesehen ist. Vorzugsweise steht die Motorsteuerung 595b mit der Steuereinrichtung 595a in Verbindung, um das Hubrelais 500 gemäß der oben beschriebenen erfindungsgemäßen Wirkungsweise mit Strom zu versorgen. Da in der in Figur 6 dargestellten Schaltung der Schalter S₂ in einer Steuervorrichtung (Motorelektronik 595b) untergebracht ist, die von der Steuereinrichtung 595a getrennt ist, in der der Schalter S₃ vorgesehen ist, und auf Grund der damit getrennt vorliegenden Zuleitungen ergibt sich für die Steuerung des Hubrelais' 500 eine gewisse Redundanz, wenn die Motorelektronik 595b oder die Steuereinrichtung 595a ausfällt.

Die in den Figuren 5 und 6 dargestellten Schalter S₂ und S₃ können elektrische Relais, MOSFET-Transistoren, Bipolartransistoren, Tyristoren, Triacs oder im Allgemeinen Leistungselektronik sein, deren Schaltzustand durch externe Steuersignale beeinflusst werden kann. Der Schalter 480 (Figur 5) bzw. der Schalter 580 (Figur 6) ist vorzugsweise ein Schalter, dessen Schaltzustand sich auf Grund der Position des beweglichen Betätigungselements der Kupplung ändert. Vorzugsweise ist der Schalter 480 bzw. 580 eingerichtet und angeordnet, beim Erreichen einer bestimmten Stellung durch das Betätigungselement, das einem gewissen Schließgrad der Kupplung entspricht, vom geöffneten Zustand in den geschlossenen Zustand überzugehen.

Vorzugsweise werden das erfindungsgemäße Hubrelais und das Verfahren zum Betätigen einer Kupplung in einem Starter für Kraftfahrzeuge vorgesehen, deren Antrieb einen Verbrennungsmotor umfasst, der von dem Starter gestartet wird.

## Patentansprüche

1. Hubrelais (400, 500) mit einem beweglichen Betätigungselement, auf das ein erster Hubmagnet kraftübertragend wirkt, wobei das Hubrelais (400, 500) mindestens einen zweiten Hubmagneten aufweist, der auf dasselbe bewegliche Betätigungselement (50, 150) kraftübertragend wirkt, und dessen Magnetkraft unabhängig von der Magnetkraft des ersten Hubmagneten eingestellt werden kann, wobei das Betätigungselement einen magnetischen Abschnitt umfasst und sowohl die Magnetkraft des ersten Hubmagneten als auch die Magnetkraft des zweiten Hubmagneten auf den magnetischen Abschnitt des Betätigungselements wirken, **dadurch gekennzeichnet, dass** der erste Hubmagnet (10, 110) und der zweite Hubmagnet (20, 40; 120, 140) jeweils als Wicklungsabschnitt einer durchgehenden Wicklung ausgebildet sind, die eine Anzapfung aufweist, welche den Wicklungsabschnitt des ersten Hubmagneten von dem Wicklungsabschnitt des zweiten Hubmagneten trennt.

2. Hubrelais (400, 500) nach Anspruch 1, das ferner mindestens ein NTC-Element umfasst, das in die Stromzuführung des ersten und/oder des zweiten Hubmagneten (10, 20; 110, 120) eingeschaltet ist und angeordnet ist, die Temperatur des ersten und/oder des zweiten Hubmagneten (10, 20; 110, 120) zu erfassen.

3. Starter für einen Verbrennungsmotor eines Kraftfahrzeugs, der ein Hubrelais (400, 500) nach einem der Ansprüche 1-2, einen elektrischen Startermotor (490) und eine Kupplung (270) umfasst, wobei das Hubrelais (400, 500) mit der Kupplung (270) zu deren Betätigung verbunden ist und die Kupplung abhängig von der Betätigung die vom elektrischen Startermotor (490) erzeugte Rotationsleistung an den Verbrennungsmotor liefert.

## Claims

1. Lifting relay (400, 500) with a movable actuating element on which a first lifting magnet acts in a force-transmitting manner, wherein the lifting relay (400, 500) comprises at least one second lifting magnet which acts in a force-transmitting manner on the same movable actuating element (50, 150) and the magnetic force of which can be adjusted independently of the magnetic force of the first lifting magnet, wherein the actuating element comprises a magnetic portion and both the magnetic force of the first lifting magnet and the magnetic force of the second lifting magnet act on the magnetic portion of the actuator, **characterised in that** the first lifting magnet (10, 110) and the second lifting magnet (20, 40; 120, 140) are each formed as a winding portion of a continuous winding comprising a tap separating the winding portion of the first lifting magnet from the winding portion of the second lifting magnet.

2. Lifting relay (400, 500) according to claim 1 further comprising at least one NTC element connected to the current supply of the first and/or second lifting magnet (10, 20; 110, 120) and arranged to detect the temperature of the first and/or second lifting magnet (10, 20; 110, 120).

3. Starter for an internal combustion engine of a motor vehicle, comprising a lifting relay (400, 500) according to any one of claims 1 to 2, an electric starter motor (490) and a clutch (270), wherein the lifting relay (400, 500) is connected to the clutch (270) for actuation thereof and the clutch supplies rotational power generated by the electric starter motor (490) to the internal combustion engine in response to the actuation.

## Revendications

1. Relais de montée (400, 500) ayant un élément d'actionnement mobile, sur lequel agit un premier aimant de montée de manière à transmettre les forces, dans lequel le relais de montée (400, 500) comporte au moins un second aimant de montée qui agit sur le même élément d'actionnement mobile (50, 150) de manière à transmettre les forces, et dont la force magnétique peut être réglée indépendamment de la force magnétique du premier aimant de montée, dans lequel l'élément d'actionnement inclut une partie magnétique et la force magnétique du premier aimant de montée et la force magnétique du second aimant de montée agissent toutes deux sur la partie magnétique de l'élément d'actionnement, **caractérisé en ce que** le premier aimant de montée (10, 110) et le second aimant de montée (20, 40 ; 120, 140) sont respectivement formés comme une partie d'enroulement d'un enroulement continu qui comporte un branchement qui sépare la partie d'enroulement du premier aimant de montée de la partie d'enroulement du second aimant de montée.

2. Relais de montée (400, 500) selon la revendication 1, incluant en outre au moins un élément NTC qui est intercalé dans l'alimentation en courant du premier et/ou du second aimant de montée (10, 20 ; 110, 220) et est agencé de manière à détecter la température du premier et/ou du second aimant de montée (10, 20 ; 110, 200).

3. Démarreur pour un moteur à combustion d'un véhicule automobile, qui inclut un relais de montée (400, 500) selon l'une des revendications 1 à 2, un moteur de démarreur électrique (490) et un embrayage (270), dans lequel le relais de montée (400, 500) est relié à l'embrayage (270) pour l'actionnement de celui-ci et l'accouplement fournit au moteur à combustion une puissance de rotation générée par l'actionnement du moteur de démarreur électrique (490).
